# EUROPÄISCHE PATENTSCHRIFT

(11) **EP 0 403 750 B1**
(45) Veröffentlichungstag und Bekanntmachung des Hinweises auf die Patenterteilung: **30.06.1993**
(21) Anmeldenummer: 90107050.8
(22) Anmeldetag: 12.04.1990
(51) Int. Cl.: B64C 27/41

(54) **Rotor mit einem schlaggelenkigen Blattanschluss im Rotorzentrum**
Rotor with blades flapping joint in the rotor centre
Rotor avec articulation de battement des pales au centre du rotor

(30) Priorität: 19.06.1989 DE 3919931
(43) Veröffentlichungstag der Anmeldung: 27.12.1990
(73) Patentinhaber: Eurocopter Deutschland Gesellschaft mit beschränkter Haftung, D-81611 München (DE)
(72) Erfinder: Hahn, Michael, D-8012 Ottobrunn (DE)
(74) Vertreter: Frick, Gerhard, Dipl.-Ing.

(56) Entgegenhaltungen:
- EP-A- 0 176 466
- GB-A- 2 175 273
- US-A- 2 961 051

## Beschreibung

Die Erfindung betrifft einen Rotor gemäß dem Oberbegriff des Patentanspruchs 1.

Bei einem derartigen sog. halbstarren Rotor beispielsweise gemäß der US-PS 47 08 591 erfolgt zur Entlastung des Blattanschlußgelenkes von den Antriebsmomenten der Rotorantrieb mittels der Antriebswelle über zwei flexible Faltenbälge in symmetrischer Anordnung (oberhalb bzw. unterhalb) zu einer um das Blattanschlußgelenk positionierten ringscheibenförmigen Rotornabe, wobei der Antriebswelle je Faltenbalg eine Mitnehmerscheibe zugeordnet ist. Durch ihren im Bezug auf die Antriebswelle großen Durchmesser sichert die Mitnehmerscheibe eine Einleitung eines relativ großes Drehmoments in das flexible Verbindungsmittel bei relativ geringer Umfangskraft. Durch solche Faltenbälge läßt sich beim Blattschlagen eine gleichförmige Drehmitnahme des Rotors, d.h. Gleichlauf desselben mit der Antriebswelle sicherstellen, sofern es unter Torsionslast nicht zu einem Ausknicken der Balgwandung kommen kann. Jedoch sind diese Faltenbälge, als Hüllwand des Blattanschlußgelenkes, so großflächig zu dimensionieren, daß sie nicht zu einer Kraftverbindung von der Rotornabe zur Antriebswelle nutzbar sind, über welche in Blattschlagrichtung an der Antriebswelle Steuermomente zur Lagesteuerung des Drehflügelflugzeugs bewirkbar sind. Mit diesem Mangel ist ein durch die GB-A-2 175 273 oder EP-A-0 176 466 bekannter Rotor nicht behaftet, bei dem der Rotorantrieb über eine die Antriebswelle mit der Rotornabe kuppelnde Federscheibe erfolgt. Jedoch ist in der bekannten Anordnung das flexible Verbindungsmittel direkt an der Antriebswelle angeflanscht, so daß die in das Verbindungsmittel eingeleiteten Kräfte relativ groß sind, und folglich die Größe der übertragbaren Drehmomente relativ beschränkt ist.

Der Erfindung liegt daher die Aufgabe zugrunde, bei einem Rotor der eingangs genannten Art Gleichlauf desselben mit seiner Antriebswelle durch Mittel zu erreichen, welche zugleich die vorgenannte Funktion einer in Blattschlagrichtung wirksamen Kraftverbindung von der Rotornabe zur Antriebswelle zu erfüllen vermögen.

Diese Aufgabe ist für einen gattungsgemäßen Rotor mit den kennzeichnenden Merkmalen des Patentanspruchs 1 gelöst. Hiernach erfolgt die Kupplung der Rotornabe mit der Antriebswelle durch einen diese aufgrund seiner Gestaltung sowohl in Rotordrehrichtung als auch in Blattschlagrichtung kraftschlüssig verbindenden Federring, wobei dieser Winkelbeschleunigungen zwischen der Antriebswelle und dem angetriebenen Rotor unterbindet, dabei aber, je nach Wahl der Federkennung, dessen Schlagwinkelbeweglichkeit sicherstellt und zugleich als Element von belastungsabhängiger Starrheit in Blattschlagrichtung, die Funktion einer sog. Schlagfeder erfüllt, mittels welcher durch an der Rotornabe einwirkende Steuerkräfte (einer Lagesteuerung) entsprechende Steuermomente an der Antriebswelle (in Blattschlagrichtung) bewirkbar sind. Bei dieser Belastung des Federringes (auf Blattschlagbiegung) läßt sich durch die im Anspruch 2 gekennzeichnete Gestaltung eine gleichmäßige Spannungsverteilung über den Ringscheibenradius sicherstellen. Die im Anspruch 3 gekennzeichnete Ausgestaltung ermöglicht hierbei nicht nur die Benutzung einfacher, lösbarer Verbindungsmittel, sondern gewährleistet auch die zur Funktionserfüllung des Federringes erforderliche Distanzierung der Ringscheiben von der Mitnehmerscheibe und Rotornabe.

Im folgenden wird die Erfindung anhand zweier Ausführungsbeispiele weiter erläutert. Dabei zeigt die Zeichnung in je einer Seitenansicht das Zentrum zweier halbstarrer Rotoren, und zwar in
- Fig. 1: mit einem oberhalb der Rotordrehebene wirkenden zentralen Blattschlaggelenk und
- Fig. 2: mit einem in der Rotordrehebene angeordneten zentralen Blattschlaggelenk.

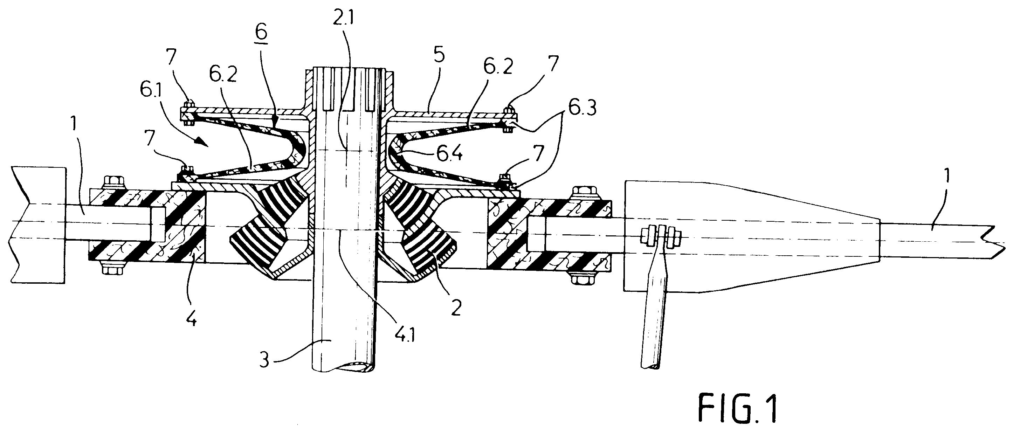

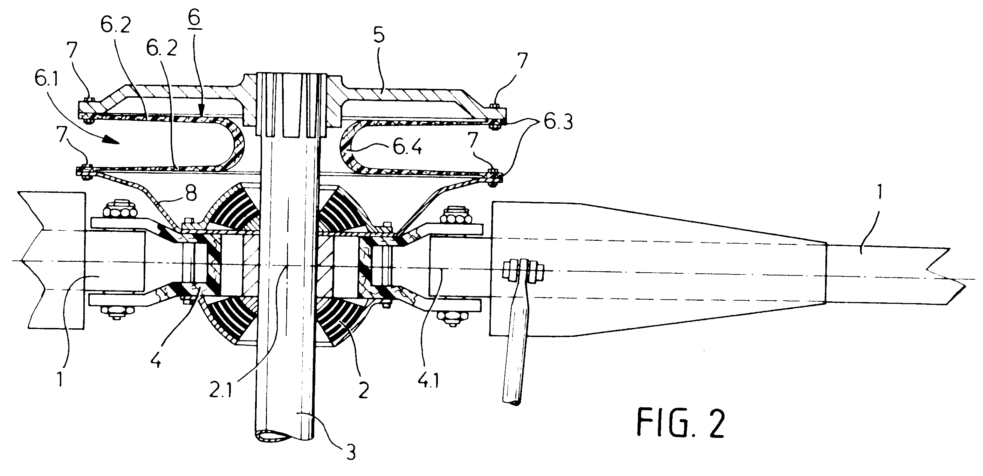

Die dargestellten Rotoren, z.B. für ein Kipprotorflugzeug, sind solche der sog. halbstarren Bauweise mit einem schlaggelenkigen Blattanschluß sämtlicher Rotorblätter 1 im Rotorzentrum mittels eines allseitig winkelbeweglichen Gelenklagers 2 vorzugsweise in Form eines Elastomerlagers, welches auf einer Rotor-Antriebswelle 3 festsitzend angeordnet ist. Andererseits ist dieses (Schlag-)Gelenklager 2 die Basis einer die Rotorblätter 1 vereinigenden biegesteifen Rotornabe 4. Die in Fig. 1 dargestellte Anordnung des Gelenklagers 2 mit dem (Schlag-)Gelenkmittelpunkt 2.1 oberhalb der Rotordrehebene 4.1 (sog. "underslung") hat gegenüber der Anordnung gemäß Fig. 2 den Vorteil einer zusätzlichen Stabilisierung des Rotors beim Anlassen (Anlaufen) und Abbremsen. Die Gegenüberstellung der Fig. 1 und 2 verdeutlicht, daß die nachfolgend erläuterte Erfindung auf eine bestimmte Positionierung und Ausbildung des Gelenklagers 2 nicht beschränkt und einzige Voraussetzung ein Rotorantrieb über eine steife Mitnehmerscheibe 5 zwischen der Antriebswelle 3 und Rotornabe 4 ist. Um mittels dieser Mitnehmerscheibe 5 ein Drehen der Rotornabe 4 und damit einen Umlauf der Rotorblätter 1 so zu bewirken, daß Winkelbeschleunigungen (bzw. -verzögerungen) zwischen der Antriebswelle 3 und Rotornabe 4 beim Blattschlagen ausgeschlossen sind, ist letztere mit der Mitnehmerscheibe 5 über einen mit radialem Abstand um die Antriebswelle 3 (und hierzu zweckmäßig auch koaxial) angeordneten Federring 6 gekuppelt. Der Federring 6 soll nicht nur die Drehmomentenübertragung auf die Rotornabe 4 sicherstellen, ohne die Blattschlagbewegungen mittels des Gelenklagers 2 zu beeinträchtigen, sondern dabei auch die Funktion einer sog. Schlagfeder erfüllen, d.h. soll zugleich an der Rotornabe 4 in Blattschlagrichtung einwirkende Steuerkräfte einer Lagesteuerung des betreffenden Drehflügelflugzeugs auf die Antriebswelle 3 übertragen. Um diese Doppelfunktion erfüllen zu können, ist der Federring 6 durch eine ringsum symmetrische Profilvertiefung 6.1 in zwei Ringscheiben 6.2 gespalten, von denen je eine der Rotornabe 4 und Mitnehmerscheibe 5 zugeordnet ist. Hierbei ist die Verbindung 7 der einzelnen Ringscheibe 6 mit der Rotornabe 4 bzw. Mitnehmerscheibe 5 (z.B. mittels Schrauben) auf den Scheibenaußenrand beschränkt, wozu die Ringscheiben 6.2 an der betreffenden Randfläche jeweils eine Materialaufdickung 6.3 aufweisen. Damit ist die zur Funktionserfüllung erforderliche Bewegungsfreiheit der Ringscheiben 6.2 gegenüber der Rotornabe 4 bzw. Mitnehmerscheibe 5 sichergestellt. In diesem Sinne von Vorteil ist selbstverständlich auch der gemäß Fig. 1 für den Federring 6 gewählte V-förmige Profilquerschnitt, dagegen bei der gemäß Fig. 2 bevorzugten Anordnung des Gelenklagers 2 in der Rotordrehebene 4.1 das dargestellte vom Federring 6 abgesetzte Profil der Mitnehmerscheibe 5 sowie ein der Rotornabe 4 und dem Federring 6 zwischengefügter Distanzscheibenring 8. Der bei der Anordnung gemäß Fig. 2 für den Federring 6 bevorzugte U-förmige Profilquerschnitt hat wie der V-förmige Profilquerschnitt gemäß Fig. 2 den schon erwähnten Vorteil, daß der Federring 6 mit relativ geringem Fertigungsaufwand aus faserverstärktem Kunststoff herstellbar ist, und zwar problemlos mit der dargestellten verjüngten Form der Ringscheiben 6.2 von der gemeinsamen Federringwurzel 6.4 aus. Damit ist auch eine gleichmäßige Spannungsverteilung über den Ringscheibenradius unter Schlagbiegebelastung der Ringscheiben 6.2 gewährleistet.

## Patentansprüche

1. Rotor, insbesondere eines Drehflügelflugzeugs, mit einem Blattanschluß über eine sämtliche Rotorblätter vereinigende Rotornabe auf einem Schlaggelenk im Rotorzentrum, wobei die Rotornabe von einer Antriebswelle über eine steife Mitnehmerscheibe durch ein flexibles Verbindungsmittel zwischen dem Außenrand der Mitnehmerscheibe und der Rotornabe antreibbar ist, **dadurch gekennzeichnet, daß** das flexible Verbindungsmittel ein um die Antriebswelle (3) mit radialem Abstand angeordneter Federring (6) mit nach außen offenem V- oder U-förmigen Profilquerschnitt ist, dessen eine Profilhälfte (6.2) über eine auf ihren Profilaußenrand beschränkte Verbindung (7) der Mitnehmerscheibe zugeordnet und dessen andere Profilhälfte (6.2) über eine auf ihren Profilaußenrand beschränkte Verbindung (7) der Rotornabe (4) zugeordnet ist.

2. Rotor nach Anspruch 1, **dadurch gekennzeichnet,** daß die Profilhälften (6.2) des Federringes (6) sich von der gemeinsamen Profilwurzel (6.4) ausgehend verjüngen.

3. Rotor nach Anspruch 1, **dadurch gekennzeichnet,** daß die Profilhälften (6.2) jeweils an der der Mitnehmerscheibe (5) bzw. Rotornabe (4) zugewandten Randfläche des Profilaußenrandes eine Materialaufdickung (6.3) aufweisen.

## Claims

1. Rotor, in particular of a rotary-wing aircraft, comprising a blade retention via a rotor hub which combines all rotor blades on a flapping hinge in the rotor centre, in which respect the rotor hub is driven by a driveshaft via a rigid driving plate by means of a flexible connecting means between the outside edge of the driving plate and the rotor hub, **characterised in that** the flexible connecting means is a spring washer (6), which is arranged at a radial distance around the driveshaft (3) and of cross-sectionally V- or U-shaped outwardly open profile, the one profile half (6.2) of which is associated with the driving plate via a connection (7) which is limited to its profile's outside edge and the other profile half (6.2) of which is associated with the rotor hub (4) via a connection (7) which is limited to its profile's outside edge.

2. Rotor according to claim 1, **characterised in that** the profile halves (6.2) of the spring washer (6) narrow from the common profile root (6.4) onwards.

3. Rotor according to claim 1, **characterised in that** the profile halves (6.2) have a thickening of material (6.3) at the respective profile's outside edge which is facing towards the driving plate (5) or the rotor hub (4) respectively.

## Revendications

1. Rotor, en particulier d'un giravion, avec une fixation de pale sur un axe de battement, au centre du rotor, réalisée par l'intermédiaire d'un moyeu de rotor réunissant toutes les pales du rotor, le moyeu pouvant être entraîné par un arbre d'entraînement, par l'intermédiaire d'un plateau d'entraînement rigide, par des moyens de liaison flexible disposés entre le bord extérieur du plateau d'entraînement et le moyeu de rotor, caractérisé par le fait que le moyen de liaison flexible est un anneau élastique (6) à section en forme de V ou de U ouvert vers l'extérieur qui est disposé autour de l'arbre d'entraînement (3), à distance radiale de celui-ci et dont une moitié de profil (6.2) est associée au plateau d'entraînement par l'intermédiaire d'une liaison (7) limitée à son bord extérieur et dont l'autre moitié de profil (6.2) est associée au moyeu (4) de rotor par l'intermédiaire d'une liaison (7) limitée à son bord extérieur.

2. Rotor selon la revendication 1, caractérisé par le fait que les moitiés (6.2) de profil de l'anneau élastique (6) se rétrécissent à partir du pied (6.4) du profil commun.

3. Rotor selon la revendication 1, caractérisé par le fait que les moitiés (6.2) de profil présentent un bourrelet (6.3) de matériau sur la surface périphérique du bord extérieur du profil tournée vers le plateau d'entraînement (5) ou le moyeu de rotor (4).
